# EUROPÄISCHE PATENTSCHRIFT

(11) **EP 0 671 348 B1**
(45) Veröffentlichungstag und Bekanntmachung des Hinweises auf die Patenterteilung: **21.07.1999**
(21) Anmeldenummer: 95710004.3
(22) Anmeldetag: 07.02.1995
(51) Int. Cl.: B65G 1/04

(54) **Vollautomatische Paletten-Lagereinrichtung**
Fully automated pallet warehouse
Dispositif de stockage automatisé pour palettes

(30) Priorität: 10.03.1994 DE 4407999
(43) Veröffentlichungstag der Anmeldung: 13.09.1995
(73) Patentinhaber: Noell Stahl- und Maschinenbau GmbH, 97080 Würzburg (DE)
(72) Erfinder: Grünanger, Gerhart, Dr., D-63872 Heimbuchenthal (DE); Miller, Michael, D-97074 Würzburg (DE); Weis, Otto, D-97241 Oberpleichfeld (DE)
(74) Vertreter: Lüdtke, Frank

(56) Entgegenhaltungen:
- EP-A- 0 514 241
- CH-A- 436 380
- DE-A- 2 712 494
- DE-A- 4 028 590
- DE-A- 4 119 998
- DE-U- 8 912 922
- FR-A- 2 651 823

## Beschreibung

Die Erfindung betrifft eine Einrichtung zum Verteilen und Lagern von Gütern, wie Fahrzeugen, Containern oder dergleichen, insbesondere von Kraftfahrzeugen und/oder Containern.

Die Erfindung ist geeignet für die Anwendung in automatischen Parkhäusern, als Lager für Container, als auch für Umschlagterminals zwischen Fahrzeugen unterschiedlicher Art, wie Schiffe, Lastkraftwagen und Bahnwagen.

Lagereinrichtungen zum Verteilen und Lagern von Gütern, insbesondere von Kraftfahrzeugen und Containern sind hinlänglich aus der einschlägigen Literatur bekannt.

Aus EP 0 514 241 A1 geht eine Einrichtung zum Umlaufen von angetriebenen Werkstückträger-Paletten hervor, bei der schwenkbare Tragrollen vorhanden sind und Antriebsrollen auf Schienen seitlich abrollen und die Paletten antreiben. Die Schienen sind mittels Schrauben an einer Unterlage befestigt und werden um Ecken geführt. Ein beliebiges rechtwinkliges Abbiegen ist mit dieser Vorrichtung nicht möglich. Streckenänderungen werden durch das Verlegen der Schienen realisiert. Die Führung der Paletten an den Schienen erfolgt spielfrei und an Wälzlagern, was eine genaue Justierung der Wälzlager erfordert, die aber aufgrund der Antriebsfunktion der Führungsrollen notwendig ist. Bei den Schienen wird nach Antriebs- und Führungsschiene unterschieden. Richtungsänderungen erfolgen durch das Durchfahren von Kurven oder durch Weichen.

Für Paletten, die selbst keinen Antrieb haben und möglichst rechtwinklig abbiegen oder weiterfahren sollen, ist dieses System ungeeignet, da durch die vorhandenen Schienen, Weichen, Antriebs- und Übertragungsmechanismen erhöhte Material- und Fertigungskosten entstehen, wobei aufgrund der Vielzahl der Teile die Betriebssicherheit begrenzt ist.

Die FR 20 50 321 beschreibt eine Verteilungsanlage für Gegenstände aus verschiedenen Herkunftssorten, wobei die Gegenstände auf einer Plattform transportiert werden und Führungsnuten für die Führung der sogenannten Fahrzeuge sorgt, auf denen Gegenstände transportiert werden. Ob sich auf der Plattform Führungselemente für Räder an den Paletten der Fahrzeuge befinden, ist nicht offenbart, lediglich daß Kugeln in Führungsnuten, Kontaktflächen oder Luftkissen zwischen der Plattform und der Palette angeordnet sind.
Nachteilig an dieser Lösung ist, daß sie für einen robusten Betrieb, wie er beim Transport hoher Lasten, wie zum Beispiel Fahrzeuge (Pkw) auf Paletten in automatischen Parkhäusern oder in Umschlagterminals mit Containern auftritt, aufgrund höherer seitlicher Kräfte, nicht geeignet erscheint.

FR-PS 26 39 596 beschreibt ein Führungssystem mit Tragrollen, die nicht als Schwenkrollen ausgebildet sind und mit denen Richtungsänderungen durchführbar sind. Die Richtungsänderungen können mit dieser Vorrichtung weichenlos erfolgen, allerdings nicht rechtwinklig.

Transportmittel mit angebrachten Schwenkrollen sind in Dreh- und Rollstühlen oder an Liegen zum Unterfahren von PKWs vielfach vorhanden und stellen bekannte Einrichtungen dar.
Bei einer Bewegung des Transportmittels folgen die Schwenkrollen dabei immer der Kraftrichtung des Antriebsmittels auf einer nicht exakt definierten Bahn, eine Führung findet nicht statt.

Auch die DE 42 32 926 A1 beschreibt eine vollautomatische Paletten-Lagereinrichtung für Fahrzeuge und Container, bei der der Transport der Paletten auf Containern und mittels unter den Paletten angeordneten Kugelrollen erfolgt.
Diese Lösung hat den Nachteil, daß bei hohen Lasten, die bei schweren Fahrzeugen oder schweren Containern vorhanden sind, ein rascher Verschleiß der Kugelrollen oder ihrer Führungen zu verzeichnen ist.

Weiterhin biegen sich hoch belastete Paletten durch, so daß sich der Abstand zwischen Palette und dem Linearmotor verändert, was zu Betriebsstörungen führt und das gesamte Antriebssystem in Frage stellt.

Es ist daher Aufgabe der Erfindung, eine Einrichtung zum Verteilen und Lagern von Gütern zu entwickeln, in der Transportmittel mit größeren Lasten beliebige, weichenlose Richtungsänderungen auf exakt definierten Bahnen durchführen können, ohne daß es zu Betriebsstörungen im Betriebssystem kommt und die für einen automatischen Betrieb geeignet ist.

Diese Aufgabe wird durch den ersten Patentanspruch gelöst. Die Unteransprüche geben vorteilhafte Ausführungen der Erfindung wieder.

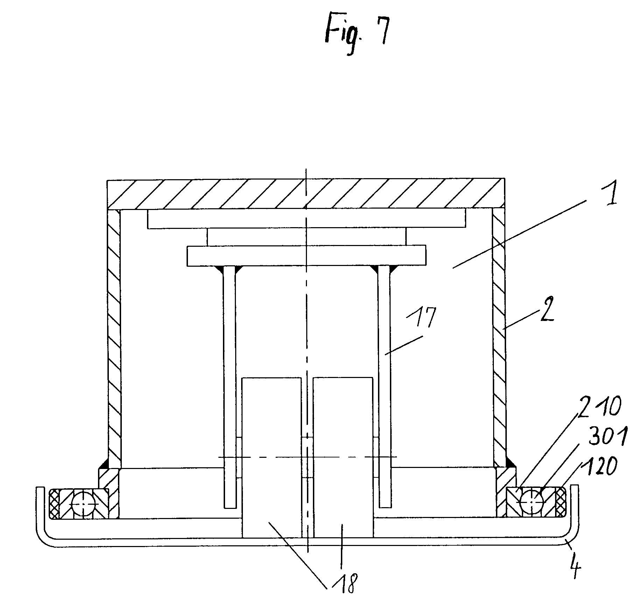

Die erfindungsgemäße Lösung sieht vor, daß an einem Transportmittel, vorzugsweise einer Palette, schwenkbare Tragrollen angeordnet sind und um diese Führungselemente, die die in einem Führungsprofil laufende Tragrolle so führen, daß diese nicht mit den Profilseiten in Berührung kommt.
Als Führungsprofil kann ein U-Profil Anwendung finden, das auf oder in die betreffende Gebäudekonstruktion fest eingebracht ist.
Die Tragrollen können an den Ecken von Paletten zum Transport des entsprechenden Gutes, zum Beispiel ein Auto in einem automatischen Parkhaus, angebracht sein.
Sinnvoll für die Funktion der Vorrichtung ist es, daß der Abstand der Tragrollen an einem Transportelement untereinander mit dem Abstand der Führungsprofile übereinstimmt.
Vorteilhaft ist es, wenn jede schwenkbare Tragrolle von mindestens vier Führungselementen umgeben ist.
Eine andere vorteilhafte Variante sieht vor, daß um die schwenkbare Tragrolle zwei gegeneinander verschiebbare Ringe, die als Gleitringe oder als Ringe zwischen denen sich Kugeln befinden können, ausgeführt sein können (Fig. 7).

Es ist weiterhin von Vorteil, wenn an den Führungselementen Führungsrollen vorhanden sind, die an der Wandung des Führungsprofiles abrollen können. Dazu sind beispielsweise Kugellager geeignet. Diese können auf etwas längeren Führungselementen angeordnet sein. Die Führungselemente können nach unten konisch ausgebildet sein, sofern das der Schwenkradius der Tragrollen erfordert. Die Führungsrollen untergreifen dann besser vom Schwenkradius der Tragrollen.
Um die Reibungsverluste bei kleinen Kurven zu minimieren, ist es vorteilhaft, mindestens zwei Tragrollen nebeneinander anzubringen, die sich mit unterschiedlicher Geschwindigkeit oder Richtung drehen können. Um eine höhere Stabilität der Führungselemente zu erhalten, kann auf die Palette auch eine Grundplatte größerer Dicke aufgesetzt werden, an die die Führungsrollen direkt angebracht sind. Dabei kann es nötig sein, diese Platte entsprechend dem Schwenkradius der Tragrollen mit Ausnehmungen zu versehen. Ebenso ist es denkbar, die Führungsrollen direkt an der Palette anzuordnen, also über dem Schwenkradius der Tragrollen, wenn das Führungsprofil die entsprechende Höhe aufweist.
Zur Geräuschminderung hat es sich als vorteilhaft erwiesen, daß Führungsprofil auf einem Dämpfungselement, das aus Gummi bestehen kann, anzuordnen.
Diese Maßnahme ist sinnvoll dahingehend zu ergänzen, daß sich zwischen der Palette und dem Fahrwerk ein Dämpfungselement befindet. Auch die schwenkbaren Tragrollen können mit einem dämpfenden Zwischenring, zum Beispiel aus Gummi, versehen werden. Ebenso ist es auch denkbar, Metallrollen mit Kunststoffbelag zu verwenden.
An den Kreuzungspunkten der Führungsprofile hat es sich als vorteilhaft erwiesen, die Ecken bogenförmig zu gestalten. Ebenso sind aber auch Kreuzungspunkte denkbar, an denen die Kanten der Führungsprofile ohne Bogen aneinanderstoßen.
Das vorgeschlagene Fahrwerk mit Führungselementen ist für das automatische Bewegen von Transportpaletten geeignet.
Insbesondere zum rechtwinkligen Abbiegen sind Schwenkrollen aufgrund ihrer Nachlauffunktion ein sehr einfaches Trag- und Fahrwerk. Das exakte Fahren der nachlaufenden Schwenkrollen wird durch seitliche Führungsrollen ermöglicht.

Zur Lösung der Aufgabe wird weiterhin von einer vollautomatischen Paletten-Lagereinrichtung zum Verteilen und Lagern von Gütern ausgegangen, bei der die Palette mit schwenkbaren Tragrollen und Antriebsmitteln transportierbar sind, die die Paletten auf Teilstrecken geradlinig bewegen, wobei zwischen diesen geraden Teilstrecken Einrichtungen zur im wesentlichen rechtwinkligen Richtungsänderung angeordnet sind und Steuerungsmittel vorhanden sind, durch welche mehrere Paletten gleichzeitig im gesamten Lagerbereich so steuerbar sind, daß Zusammenstöße vermieden werden und die jeweils kürzesten Wege gewählt werden und das Verteilen zu den Lagerplätzen und von Lagerplätzen gleichzeitig erfolgt. Die Einrichtung ermöglicht mit wenigen Mitteln kurze Zugriffzeiten und erlaubt eine hohe Durchsatzkapazität der zu lagernden Güter.

Nach einem besonders bevorzugten Merkmal der Erfindung sind die Antriebsmittel an den Wegen angeordnete Linearmotoren und an den Paletten befindliche Linearmotor-Reaktionsteile. Durch eine abschnittsweise Steuerung der Linearmotoren ist eine gleichzeitige Bewegung vieler Paletten gleichzeitig auch auf mehreren Ebenen möglich.
Zum Bewegen der einzelnen Paletten wird jeweils immer nur der direkte Linearmotor mit Strom beschickt, wodurch trotz der Vielzahl der Linearmotoren ein geringerer Anschlußwert nötig ist.
Ein anderes bevorzugtes Merkmal der Erfindung besteht darin, daß die Paletten-Lagereinrichtung als Parkanlage zum Transport und zur Lagerung von Kraftfahrzeugen ausgebildet ist, wobei die Anlage unterteilt ist in einen Ein- und einen Ausfahrbereich mit mehreren Übernahmeräumen, einem Verteilerbereich und einem Parkbereich. Ein- und Ausfahrbereich, Übernahmeräume, Verteiler- und Parkbereich können dabei, je nach Anforderung und räumlichen Gegebenheiten, in mehreren Ebenen ausgeführt werden. Das der Erfindung zugrunde liegende flexible System von Trageeinrichtungen und Antriebsmitteln erlaubt eine universelle Anpassung an unterschiedliche Grundflächen, ohne auf die Vorteile der schnellen Zugriffszeit und hohen Durchsatzkapazität verzichten zu müssen.

Das Verteilen der Fahrzeuge auf mehrere Ebenen erfolgt nach einem anderen bevorzugten Merkmal der Erfindung durch hinter jedem Übernahmeraum angeordnete Aufzüge oder nach einem weiteren Merkmal durch im Verteilerbereich angeordnete gegenläufig Schrägaufzüge.

Nach einem anderen Merkmal der Erfindung ist im Verteilerbereich und/oder Parkbereich wenigstens eine Drehscheibe angeordnet. Die Drehscheibe ermöglicht es, daß der PKW stets ausfahrbereit im Übernahmeraum übernommen werden kann.

Ein anderes bevorzugtes Merkmal der Erfindung beinhaltet, daß die Parkeinheiten als Mehrfachpaletteneinheiten angelegt sind. Das bedeutet, daß innerhalb des Parkbereiches Parkeinheiten so ausgestaltet sind, daß mehrere Paletten parallel nebeneinander eingelagert werden können. Die Mehrfachbelegung der Parkeinheiten ermöglicht eine sehr hohe Flächenausnutzung je Etage.

Weiterhin ist es vorteilhaft zum einwandfreien Lauf des Antriebes mit Linearmotoren, das Unterteil der Palette so zu gestalten, daß es auch bei hohen Lasten nicht zum Durchbiegen des Palettenunterteiles kommen kann.
Das kann dadurch erreicht werden, daß die Palette aus einem oberen Palettenteil besteht, auf dem die Last, beispielsweise ein PKW oder ein Container, steht und ein unteres Palettenteil, an dem sich die Transportrollen, die Führungsrollen und das Linearmotor-Reaktionsteil befindet. Beide Palettenteile können mittels Dämpfungselementen miteinander verbunden sein. Bei dieser Ausführung der Palette kann sich das obere Palettenteil aufgrund der Last verbiegen, während das untere Palettenteil mit dem Linearmotor-Reaktionsteil gerade bleibt, so daß sich der Abstand zu den Linearmotorteilen nicht verändert, wodurch Betriebsstörungen durch die Veränderung des Abstandes zwischen diesen Teilen ausgeschlossen sind.

Vorteilhaft ist die Anwendung der erfindungsgemäßen Vorrichtung für den Transport von Containern, die in Regallagern oder in Umschlagterminals zwischen Kraftfahrzeugen und einem Lager, Kraftfahrzeugen untereinander, mit Bahnfahrzeugen oder mit Schiffen betrieben werden können.

Im folgenden ist die erfindungsgemäße Lösung an einem Ausführungsbeispiel und dreizehn Figuren dargestellt.
Die Figuren zeigen:
- Figur 1: Palette mit vier Fahrwerks- und Führungselementen auf einem U-förmigen Führungsprofil mit einem rechtwinkligen Kreuzungspunkt in einem automatischen Parkhaus
- Figur 2: Teilschnitt einer Tragrolle mit angeschraubten Führungselementen, die mittels horizontaler Führungsrollen in einem U-Profil geführt werden
- Figur 3: Waagerechter Schnitt des Tragwerkes mit vier Führungselementen und dem Führungsprofil
- Figuren 4, 5, 6: Durchlauf des Fahrwerkes und der Führungsrollen durch einen Kreuzungspunkt
- Figur 7: Teilschnitt durch Fahrwerk mit U-förmigem Führungselement und Ring mit Kugellager um das Fahrwerk
- Figur 8: Palette für Fahrzeuge in automatischen Parkhäusern mit Führungsrollen und Linearmotorreaktionsteil
- Figur 9: Isometrische Darstellung eines Parkhauses, in dem die erfindungsgemäße Vorrichtung eingesetzt ist
- Figur 10: Container auf einer Doppelpalette mit vier Rädern an jeder Tragrolle mit Führungselementen und Dämpfungselementen zwischen den Paletten
- Figur 11: PKW auf einer Doppelpalette mit zwei Rädern an jeder Tragrolle mit Führungsrollen und Dämpfungselementen zwischen den Paletten
- Figur 12: Ansicht von unten auf ein Fahrwerk mit vier Tragrollen, wobei die Tragrollen in zwei ineinander beweglichen Gleitringen fahren.
- Figur 13: Darstellung von zwei Fahrwerken mit vier Tragrollen auf einem abbiegenden Führungselement.

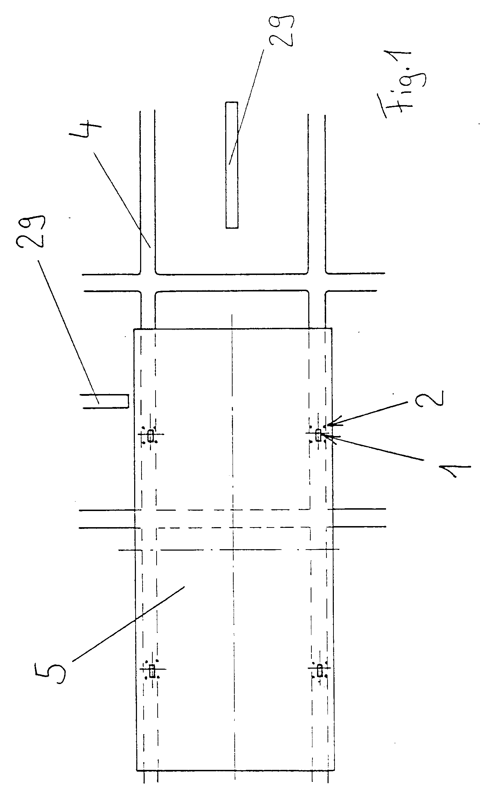

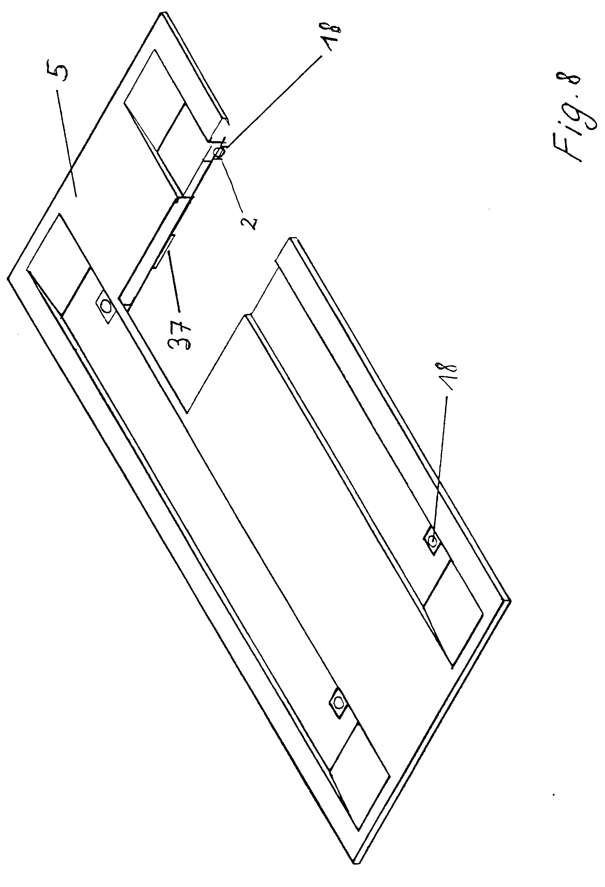

In Figur 1 ist eine Palette 5 mit vier Fahrwerks- und Führungselementen 1,2 mit dem Führungsprofil 4 an einem rechtwinkligen Kreuzungspunkt in einem automatischen Parkhaus zu sehen. Der Transport der Paletten 5 in diesem Parkhaus erfolgt mittels Linearmotor. Dazu ist an jeder Palette 5 außer den Tragrollen 18 mit Führungselementen 2 ein Linearmotorreaktionsteil 37 angeordnet (Fig. 8).

Das Fahrwerk 1 mit Führungselement 2 ruht im wesentlichen auf einem auf einer Unterkonstruktion 3 aufgesetzten Führungsprofil 4, in welchem das an der Palette 5 beispielhaft mit Schrauben 6 befestigte Fahrwerk 1 mit Führungselementen 2 bewegt wird.

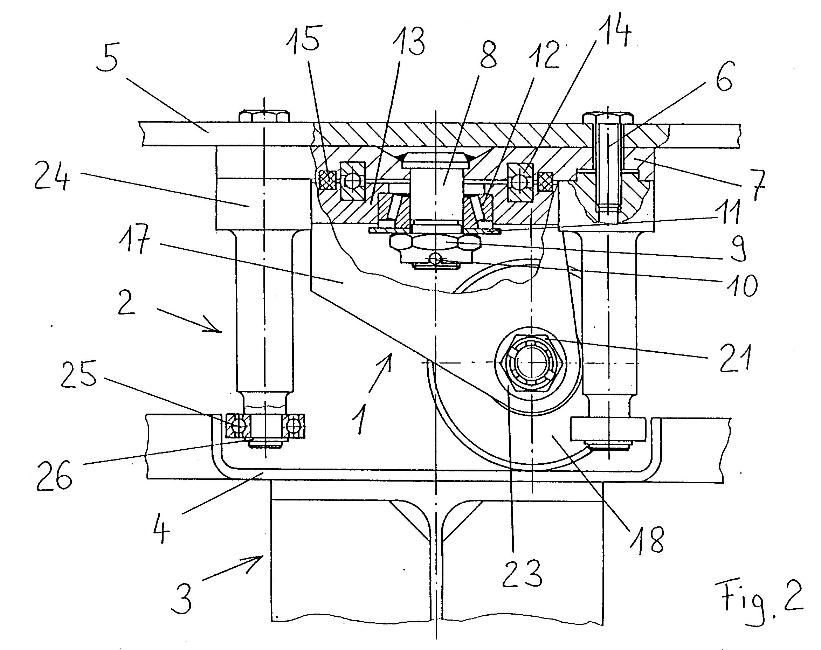

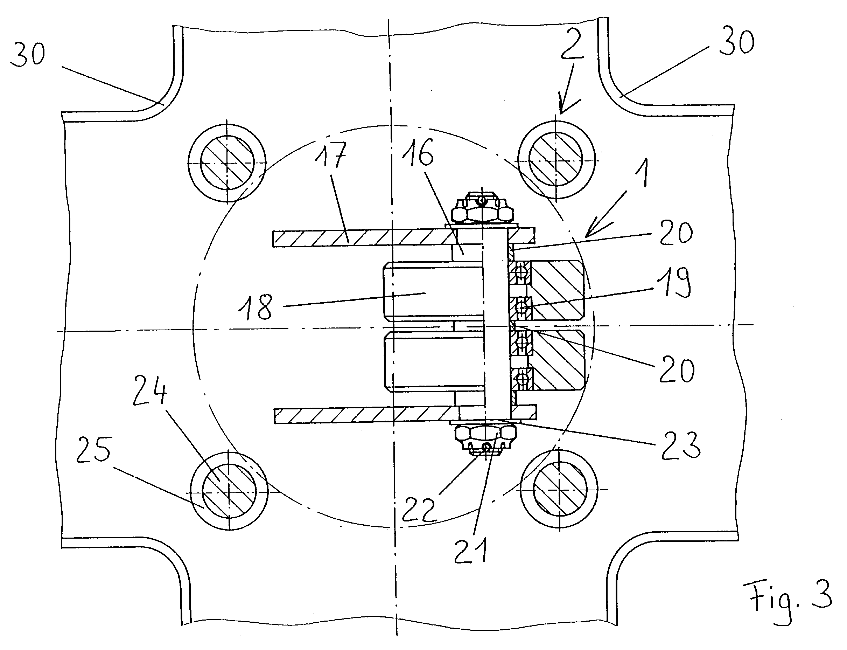

Die Bauteile des Fahrwerkes 1 sind die Grundplatte 7 mit dem im Zentrum angeordneten verschweißten Bolzen 8, der Spannmutter 9, dem Sicherheitsstift 10 und der Zwischenscheibe 11 sowie den auf dem Bolzen 8 aufgsteckten Lager 12, der Lagerplatte 13, dem Schwenkkugellager 14 und der Lagerabdichtung 15. Gezeigt sind diese Teile an den Figuren 2 und 3.

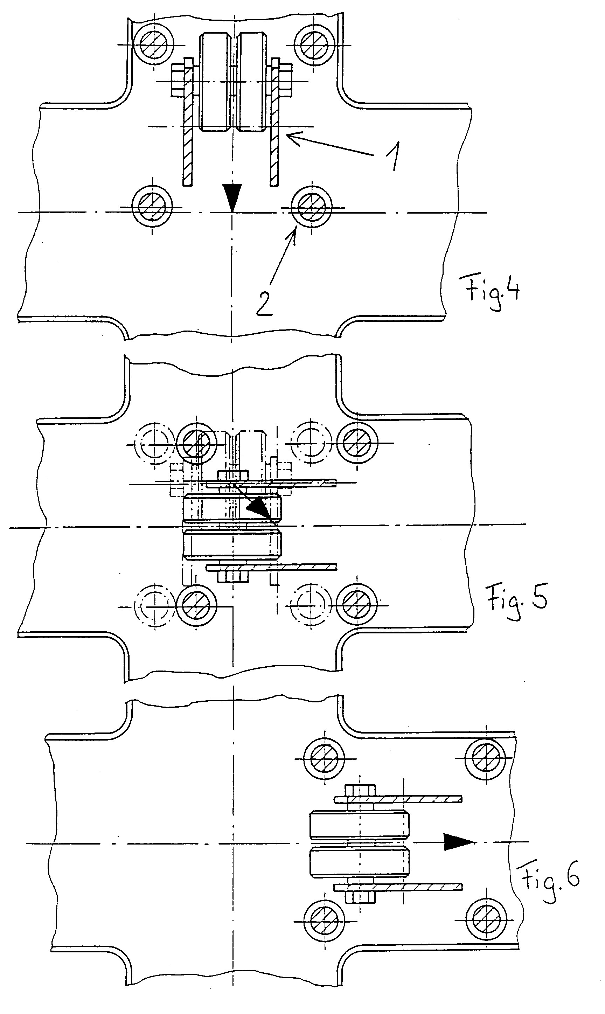

Die Funktion des Schwenkvorganges wird ausgelöst durch eine Krafteinwirkung, zum Beispiel durch einen Linearmotor 29, auf die Palette 5, wodurch über den exzentrisch versetzten Bolzen 16 im Tragblech 17 eine Hebelwirkung auf die Tragrolle 18 ausgelöst wird. Die Tragrolle 18 folgt nunmehr der Kraftrichtung. Zum leichtgängigen Lauf ist die Tragrolle 18 mit Kugellager 19 und Distanzbüchsen 20 ausgestattet, die auf den Bolzen 16 lagern. Der Bolzen 16 wird im Tragblech 17 über Spannmuttern 21, Sicherheitsstiften 22 und Distanzscheiben 23 gehalten. Der Durchlauf des Fahrwerkes 1 durch einen Kreuzungspunkt ist in den Figuren 4, 5 und 6 dargestellt.

Die vierfach angeordneten Führungselemente 2 sind mit Schrauben 6 an der Grundplatte 7 und der Palette 5 befestigt. Die Geometrie der Führungsrollenbolzen 24 wird durch den Schwenkradius der Tragrollen 18 bestimmt. An den Führungsrollenbolzen 24 ist die horizontale Führungsrolle 25 mit einem Sicherungsring 26 angeordnet.

Nach dem Erreichen des Kreuzungspunktes wird der gewünschte Richtungswechsel durch eine Krafteinwirkung auf die Palette 5 ausgelöst. Zur besseren Einführung der Führungsrolle 25 sind die Ecken 30 des Führungsprofiles 4 gerundet.

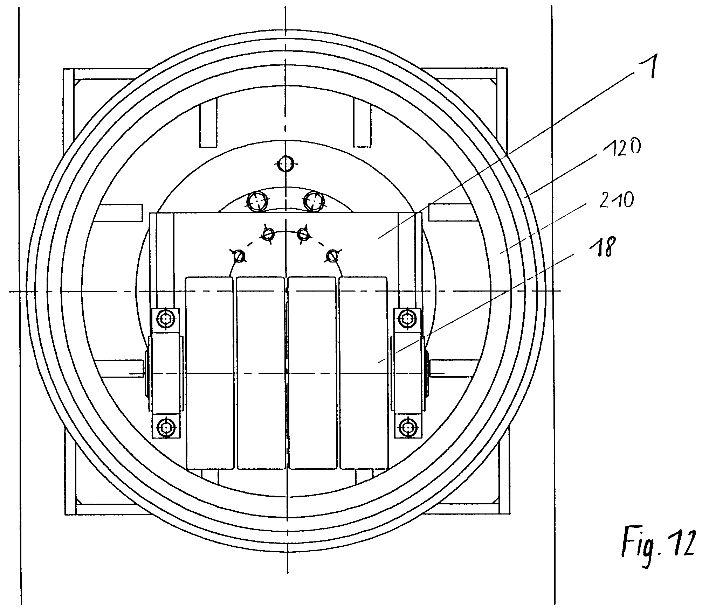

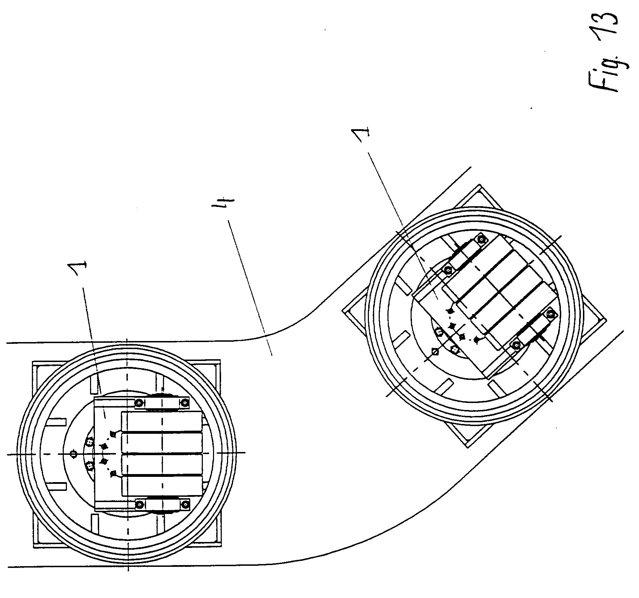

Die Figuren 7, 12 und 13 zeigen Fahrwerk 1, bei dem um die Tragrollen 18 als Führungselement 2 sich gegeneinander verdrehbare Ringe (120, 210) angeordnet sind, deren Beweglichkeit durch Kugeln (301) erhöht werden kann.

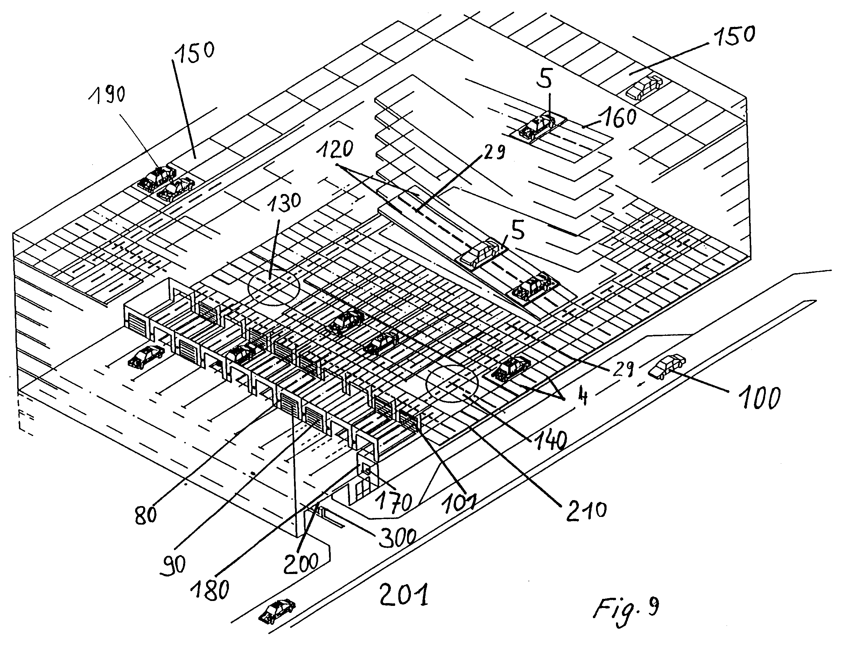

Im folgenden wird die Verwendung der erfindungsgemäßen Vorrichtung in einem automatischen Parkhaus beschrieben. Das Parkhaus ist in Fig. 9 dargestellt.

Der vom Außenbereich anfahrende PKW 100 kommt vor der Schranke 200 zum Stehen. Über einen Terminal 300 entnimmt der Fahrer eine Codekarte, gleichzeitig wird ihm der nächste freie (von mehreren) Übernahmeraum angezeigt. Zur Übernahme beziehungsweise Übergabe des PKW sind mehrere Übernahmeräume vorhanden, die einen kontinuierlichen Ablauf sicherstellen.

So können auch bei stoßartiger PKW-Anforderung (zum Beispiel Bus- oder Bahnumsteiger) die PKW nach der Erstzustellung im cirka 10-Sekunden-Takt eingelagert beziehungsweise zugestellt werden.

Als Standorte eignen sich alle hochfrequentierten Bereiche, wie öffentliche Verkehrsmittelanschlüsse, Kaufhäuser, Ausstellungen, Industriebetriebe, Behörden und so weiter.

Nach dem Öffnen der Schranke 200 fährt der PKW 100 durch den Einfahrbereich 201 in den zugewiesenen Übernahmeraum auf eine bereitstehende Palette 5. Die Palette 5 ist mit schwenkbaren Tragrollen 18 und Führungselementen 2 als Trageeinrichtung und einem zum Antriebsmittel gehörenden Linearmotor-Reaktionsteil 37 ausgestattet. Die Führungsprofile 4, auf denen die Palette 5 fährt, sind aus U-Profilen gefertigt. Nachdem alle Insassen den PKW verlassen haben, gibt der Fahrer mit der Codekarte über den Übernahmeraum-Terminal 80 den Einlagerungszyklus frei.

Der Zyklus beginnt mit dem Schließen des äußeren Übernahmeraumtores 90, der optischen Registrierung der PKW- und Palettennummer (zum Wiederfinden einer verlorenen Codekarte) und dem Öffnen des inneren Übernahmeraumtores 101, über Linearmotoren 29 und das Führungsprofil 4 wird die Palette 5 mit dem PKW 100 aus dem Übernahmeraum transportiert. Durch die an der Palette 5 angebauten Tragrolle 18 mit vier Führungselementen 2 kann mit dem Linearmotor 29 nach einem Zwischenhalt sofort eine rechtwinklige Fahrtrichtungsänderung vorgenommen werden. Nach der Ausfahrt wird der Übernahmeraum sofort mit einer leeren bzw. beim Rücktransport mit einer PKW-beladenen Palette bestückt.
Die Palette 5 gelangt durch mehrere Richtungsänderungen zur Drehscheibe 130, auf welcher die Palette 5 um 180° gedreht wird, so daß der PKW 1 später ausfahrbereit dem Übernahmeraum zugestellt werden kann.

Bei sehr hohem Einlagerungsaufkommen kann der PKW auch bei der Ausfahrt auf einer zweiten Drehscheibe 140 gedreht werden. Nach dem Drehen der Palette 5 gelangt diese rechnergesteuert zum nächsten freien Stellplatz.
Zur Überwindung der einzelnen Etagen sind zwei gegenläufige Schrägaufzüge 160 mit Linearmotoren 29 und Führungsprofil 4 eingebaut. Die redundante Ausführung der Schrägaufzüge 160 erlaubt eine gleichzeitige Auf- und Abfahrt der Paletten 5. Durch diese Maßnahme steht auch bei einer Störung an einem Schrägaufzug 160 der zweite Schrägaufzug zur Verfügung. Alle Linearmotoren 29 sind für beide Richtungsfahrten ausgelegt, so daß ein Umfahren einer eventuellen Störstelle möglich ist.

Zur Überwindung der einzelnen Etagen können auch direkt hinter jeder der Übernahmeräume Aufzüge (nicht dargestellt) angeordnet sein. In diesem Fall ist auf jeder Etage mindestens eine Drehscheibe 130 erforderlich.

Nach der Rückkehr des PKW-Fahrers wird die Codekarte am Zahlungsschalter 170 oder, bei Dauerkunden, an einem separaten Terminal 180 eingelesen. Mit dem Einlesen beginnt sofort der Rücktransport der Palette 5 vom Lagerplatz 150 zum Übernahmeraum , dem PKW-Fahrer wird unterdessen die errechnete zeitgünstigste Übernahmeraumnummer und die Ankunftszeit des Fahrzeuges mitgeteilt.

Die Fahrgäste und der Fahrer steigen nach dem Öffnen des Übernahmeraum-Außentores 90 in den PKW 100 und können ohne weitere Verzögerung die Ausfahrt antreten.

Durch die Kombination von Dauer- und Einzelkunden ist eine zugriffschnelle Mehrfachpalettenbelegung 190 im Parkbereich möglich. So kann der Rechner durch Vorprogrammierung die geplante Rückkehr der Dauerkunden rechtzeitig zum Umsetzen der Palette 5 nutzen. Durch diese Möglichkeit der Mehrfachpalettenbelegung ist eine sehr dichte Flächenausnutzung je Etage erreichbar.

Durch den Einsatz mehrerer Übernahmeräume und die abschnittweise Steuerung der Linearmotoren 29 ist eine Bewegung von mehreren Paletten 5 auf mehreren Etagen gleichzeitig möglich.

Zum Bewegen der einzelnen Paletten wird nur der direkte Linearmotor 29 mit Strom beschickt. Dadurch ergibt sich trotz der Vielzahl von Linearmotoren 29 ein geringerer Anschlußwert.

Zur Handhabung der Paletten 5 wird keine Beleuchtung benötigt.

Des weiteren wird keine Hochleistungsbelüftung wie etwa im befahrbaren Parkhaus benötigt, so daß die Anschlußleistung bei dem vorgestellten Parkhaus nicht höher sein wird.

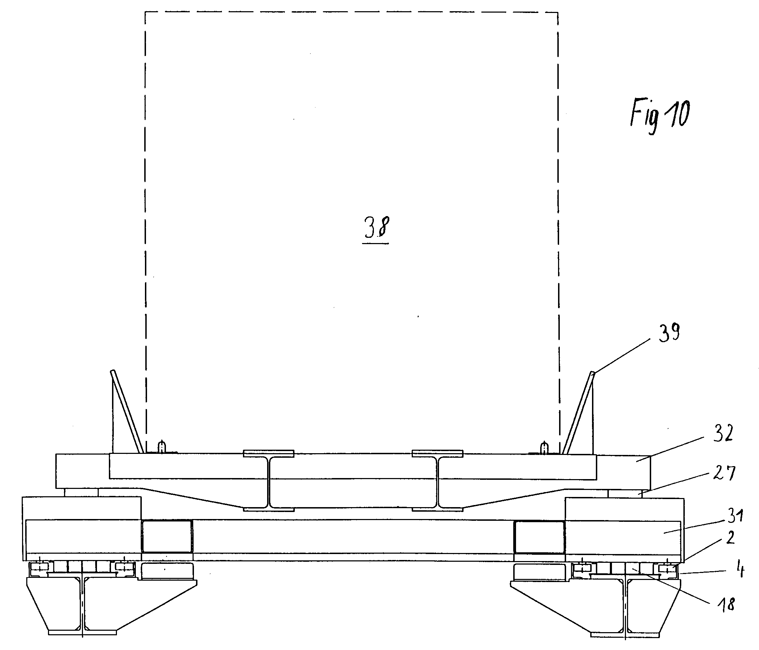

Analog kann auch die Anwendung der erfindungsgemäßen Vorrichtung in einem Regallager oder einem Umschlagterminal erfolgen. Da bei diesen Anwendungsfällen in der Regel sehr hohe Lasten in Form von Containern 38 mit Paletten 5 transportiert werden, ist es erforderlich, Paletten zu verwenden, wie sie in Figur 10 dargestellt sind. Diese Paletten 5 bestehen aus einem unteren Palettenteil 31, an dem sich an jeder Ecke die vier Tragrollen 18 auf einem Bolzen 16 des Fahrwerkes 1 befinden, wobei die Tragrollen 18 von Führungselementen 2 umgeben sind, und einem oberen Palettenteil 32, auf dem der Container 38 mit Hilfe von Führungselementen 39 abgestellt wird. Das obere und das untere Palettenteil 32, 31 sind nur durch Dämpfungselemente 27 miteinander verbunden. Der untere Palettenteil 31 enthält das Linearmotor-Reaktionsteil 37. Wird nun eine hohe Last auf der Palette abgestellt, so kommt es beim Abstellen und Transport des Containers 38 nur zu einem Verbiegen des oberen Palettenteiles 32, während das untere Palettenteil 31 auch bei hohen Lasten keine Verformung erleidet. Das hat den Vorteil, daß das untere Palettenteil 31 mit dem Linearmotor-Reaktionsteil 37 immer den gleichen Abstand zur Unterlage aufweist, wodurch ein sicherer Betrieb ohne Betriebsstörungen auch bei hohen Lasten gegeben ist.

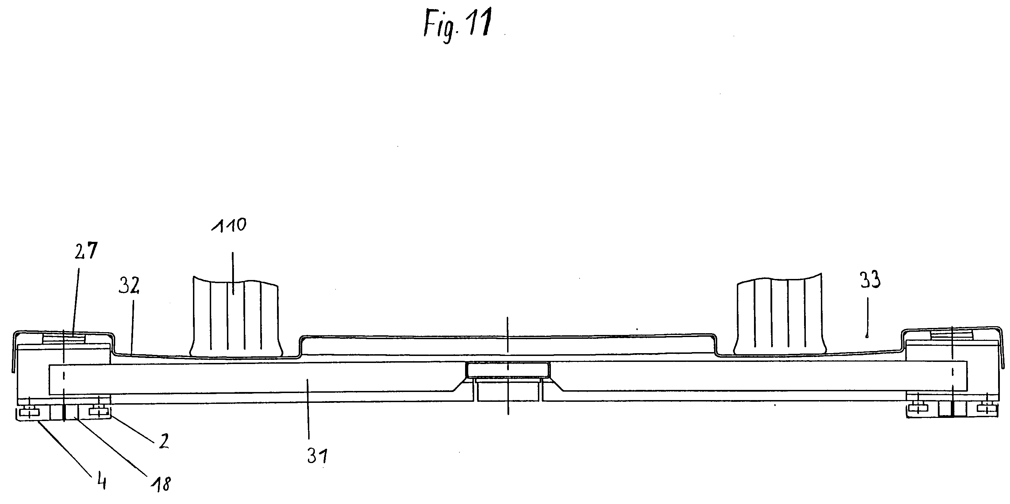

Figur 11 zeigt eine zweiteilige Palette für den Transport eines PKW 110, wobei an dem unteren Palettenteil 31 aufgrund der geringen Last nur jeweils zwei Tragrollen 18 an jedem Fahrwerk 1 vorhanden sind.

### Liste der verwendeten Bezugszeichen

- 1: Fahrwerk
- 2: Führungselement
- 3: Unterkonstruktion
- 4: Führungsprofil
- 5: Palette
- 6: Schraube
- 7: Grundplatte
- 8: Bolzen
- 9: Spannmutter
- 10: Sicherheitsstift
- 11: Zwischenscheibe
- 12: aufgestecktes Lager
- 13: Lagerplatte
- 14: Schwenkkugellager
- 15: Lagerabdichtung
- 16: exzentrisch versetzter Bolzen
- 17: Tragblech
- 18: Tragrolle
- 19: Kugellager der Tragrolle
- 20: Distanzbüchse
- 21: Spannmutter der Tragrolle
- 22: Sicherheitsstift
- 23: Distanzscheibe
- 24: Führungsrollenbolzen
- 25: horizontale Führungsrolle
- 26: Sicherheitsring
- 29: Linearmotor
- 30: Ecken des Führungsprofiles
- 31: unterer Palettenteil
- 32: oberer Palettenteil
- 33: Vertiefungen für KFZ
- 37: Linearmotor-Reaktionsteil an Palette
- 38: Container
- 39: Führungselemente für Container
- 80: Übernahmeraum-Terminal
- 90: äußeres Übernahmerammtor
- 100: PKW
- 101: Übernahmerammtor
- 110: PKW-Rad
- 120: äußerer Ring von 2
- 130: Drehscheibe I
- 140: Drehscheibe II
- 150: Lagerplatz
- 160: Schrägaufzug
- 170: Zahlungsschalter
- 180: separates Terminal
- 190: Mehrfachpalettenbelegung
- 200: Schranke
- 201: Einfahrbereich
- 210: innerer Ring von 2
- 300: Terminal
- 301: Kugel zwischen den Ringen 120 und 210.

## Patentansprüche

1. Vollautomatische Paletten-Lagereinrichtung zum Verteilen und Lagern von Gütern mit Paletten, an denen Führungselemente um schwenkbare Tragrollen zu Richtungsänderungen angeordnet sind, die geeignet sind, die schwenkbaren Tragrollen in einem dafür vorgesehenen Führungsprofil zu führen, dadurch gekennzeichnet, daß U-förmige Führungsprofile (4) im rechten Winkel zueinander angeordnet sind, und die Führungselemente (3) der schwenkbaren Tragrollen (18) an den seitlichen Führungsflächen der U-förmigen Führungsprofile geführt werden, so daß eine beliebige weichenlose Richtungsänderung möglich ist.

2. Vorrichtung nach Anspruch 1 dadurch gekennzeichnet, daß die Führungselemente (2) als ringförmige Elemente (120, 210) um die schwenkbare Tragrolle (18) ausgebildet sind, zwischen denen sich Roll- oder Gleitelemente (301) befinden können.

3. Vorrichtung nach Anspruch 1, dadurch gekennzeichnet, daß vier Führungselemente (2) um die schwenkbare Tragrolle (18) angeordnet sind und sich an jedem Führungselement (2) Führungsrollen (25) zum verschleißarmen Abrollen im Führungsprofil (4) befinden.

4. Vorrichtung nach den Ansprüchen 1 und 3, dadurch gekennzeichnet, daß die Führungsrollen (25) mittels kurzem Führungsbolzen (24) direkt auf einer Grundplatte (7) an der Palette (5) angeordnet sind.

5. Vorrichtung nach Anspruch 1, gekennzeichnet durch die Verwendung an Transportpaletten für Autos in automatischen Parkhäusern, in Regallagern und Umschlagterminals.

6. Vorrichtung nach den Ansprüchen 1 bis 5, dadurch gekennzeichnet, daß die Antriebsmittel an den Wegen angeordnete Linearmotoren (29) und an den Paletten (5) befindliche Linearmotor-Reaktionsteile sind.

7. Vorrichtung nach den Ansprüchen 5 und 6, dadurch gekennzeichnet, daß zur Verteilung der Paletten (5) auf mehrere Ebenen im Verteilerbereich hinter jedem Übernahmeraum ein Aufzug und/oder gegenläufige Schrägaufzüge angeordnet sind.

8. Vorrichtung nach den Ansprüchen 5 bis 7, dadurch gekennzeichnet, daß im Verteilerbereich (21) und/oder im Parkbereich (22) wenigstens eine Drehscheibe (13, 14) angeordnet ist.

9. Vorrichtung nach den Ansprüchen 5 bis 8, dadurch gekennzeichnet, daß die Parkeinheiten als Mehrfachpalettenstellplätze (190) ausgelegt sind.

10. Vorrichtung nach den Ansprüchen 1 bis 9, dadurch gekennzeichnet, daß die Palette (5) mit Linearmotor-Reaktionsteil (29) aus einem oberen und einem unteren Palettenteil (32, 31) besteht, sich zwischen den Palettenteilen (31, 32) Dämpfungselemente (27) befinden und auf dem oberen Palettenteil (32) Führungselemente (39) für Container (38) oder/und Vertiefungen (33) für Kraftfahrzeuge angeordnet sind.

## Claims

1. Fully automatic pallet storing means for distributing and storing articles with pallets, guide members being disposed on said pallets about pivotable supporting rollers for effecting changes in direction, which guide members are suitable for guiding the pivotable supporting rollers in a guide profile provided therefor, characterised in that U-shaped guide profiles (4) are disposed at right angles to one another, and the guide members (2) for the pivotable supporting rollers (18) are guided along the lateral guide faces of the U-shaped guide profiles, so that any desirable change in direction is possible without route-switching means.

2. Apparatus according to claim 1, characterized in that the guide members (2) are configured in the form of annular elements (120,210) around the pivotable supporting roller (18), rolling or sliding elements (301) being able to be situated between said members.

3. Apparatus according to claim 1, characterized in that four guide members (2) are disposed around the pivotable supporting roller (18), and guide rollers (25) are situated on each guide member (2) for low-wear rolling in the guide profile (4).

4. Apparatus according to claims 1 and 3, characterised in that the guide rollers (25) are disposed directly on a base plate (7) on the pallet (5) by means of a short guide bolt (24).

5. Apparatus according to claim 1, characterized by the use of transportable pallets for vehicles in automatic multi-storey car parks; in shelf-type storage systems and cargo-handling terminals.

6. Apparatus according to claims 1 to 5, characterized in that the driving means are linear motors (29), which are disposed on the paths, and linear motor reaction parts which are situated on the pallets (5).

7. Apparatus according to claims 5 and 6, characterised in that, to distribute the pallets (5) over a plurality of planes in the distribution region, a hoist and/or oppositely directed inclined hoists are disposed behind each accommodation area.

8. Apparatus according to claims 5 to 7, characterized in that at least one rotary disc (13, 14) is disposed in the distribution region (21) and/or in the parking region (22).

9. Apparatus according to claims 5 to 8, characterised in that the parking units are designed as multi-pallet emplacements (190).

10. Apparatus according to claims 1 to 9, characterized in that the pallet (5), together with linear motor reaction part (29), comprises an upper and a lower pallet portion (32, 31), damping members (27) are situated between the pallet portions (31, 32), and guide members (39) for guiding containers (38) or/and recesses (33) for accommodating automotive vehicles are disposed on the upper pallet portion (32).

## Revendications

1. Dispositif de stockage automatisé pour palettes servant à distribuer et stocker des marchandises sur palettes, auxquelles des éléments de guidage sont disposés autour de galets porteurs pivotants pour des changements de direction et conviennent pour guider les galets porteurs pivotants dans un profil de guidage prévu à cet effet, caractérisé en ce que des profils de guidage (4) en forme de U sont disposés à angle droit les uns par rapport aux autres et en ce que les éléments de guidage (3) des galets porteurs pivotants (18) sont guidés sur les surfaces de guidage latérales des profils de guidage en forme de U, de telle sorte qu'un changement quelconque de direction soit possible sans aiguillage.

2. Dispositif suivant la revendication 1, caractérisé en ce que les éléments de guidage (2) sont formés sous la forme d'éléments annulaires (120, 210) autour du galet porteur pivotant (18), entre lesquels peuvent se trouver des éléments de roulement ou de glissement (301).

3. Dispositif suivant la revendication 1, caractérisé en ce que quatre éléments de guidage (2) sont disposés autour du galet porteur pivotant (18) et chaque élément de guidage (2) comprend des galets de guidage (25) afin de rouler sans usure dans le profil de guidage (4).

4. Dispositif suivant les revendications 1 et 3, caractérisé en ce que les galetz de guidage (25) sont fixés directement à l'aide de courts boulons de guidage (24) sur une plaque de base (7) à la palette (5).

5. Dispositif suivant la revendication 1, caractérisé par son utilisation pour des palettes de transport pour autos dans des parkings automatiques, des stockages sur rayonnages et dans des terminaux de transbordement.

6. Dispositif suivant les revendications 1 à 5, caractérisé en ce que les moyens d'entraînement sont des moteurs linéaires (29) disposés le long des voies et des pièces de réaction de moteurs linéaires disposées sur les palettes (5).

7. Dispositif suivant les revendications 5 et 6, caractérisé en ce que, pour distribuer les palettes (5) sur plusieurs plans dans la zone de distribution, un ascenseur et/ou des ascenseurs obliques opposés sont disposés derrière chaque local de reprise.

8. Dispositif suivant les revendications 5 à 7, caractérisé en ce qu'au moins une plaque tournante (13, 14) est disposée dans la zone de distribution (21) et/ou dans la zone de stationnement (22).

9. Dispositif suivant les revendications 5 à 8, caractérisé en ce que les emplacements de parking sont conçus comme emplacements pour palettes multiples (190).

10. Dispositif suivant les revendications 1 à 9, caractérisé en ce que la palette (5) avec pièce de réaction de moteur linéaire (29) est constituée d'une partie supérieure et d'une partie inférieure de palette (32, 31), des éléments d'amortissement (27) se trouvent entre les parties de palette (32, 31) et des éléments de guidage (39) pour conteneurs (38) ou/et des renfoncements pour véhicules automobiles (33) sont disposés sur la partie supérieure de palette (32).
